Europäisches Patentamt

European Patent Office

Office européen des brevets

(11) Veröffentlichungsnummer: **0 133 499**
**B1**

# (12) EUROPÄISCHE PATENTSCHRIFT

(45) Veröffentlichungstag der Patentschrift:
**03.06.87**

(21) Anmeldenummer: **84108585.5**

(22) Anmeldetag: **20.07.84**

(51) Int. Cl.⁴: **B 25 J 9/06,** B 25 J 17/02

(54) Getriebekopf für Manipulatoren.

(30) Priorität: **03.08.83 DE 3328071**

(43) Veröffentlichungstag der Anmeldung:
**27.02.85 Patentblatt 85/9**

(45) Bekanntmachung des Hinweises auf die Patenterteilung:
**03.06.87 Patentblatt 87/23**

(84) Benannte Vertragsstaaten:
**AT CH DE FR GB IT LI SE**

(56) Entgegenhaltungen:
**DE - B - 2 745 932**
**DE - C - 837 629**

(73) Patentinhaber: **KUKA Schweissanlagen & Roboter GmbH, Blücherstrasse 144, D-8900 Augsburg (DE)**

(72) Erfinder: **Zimmer, Ernst, Michael Steinherr Strasse 34, D-8904 Friedberg (DE)**

(74) Vertreter: **Ernicke, Hans-Dieter, Dipl.-Ing., Schwibbogenplatz 2b, D-8900 Augsburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Getriebekopf für Manipulatoren mit den aus der DE-AS 27 45 932 vorbekannten Merkmalen des Oberbegriffes des Hauptanspruches.

Im allgemeinen weist ein vorbekannter Manipulator sechs Schwenkachsen auf, von denen die drei letzten Schwenkachsen im Bereiche des Getriebekopfes sich befinden. Die ersten drei Schwenkachsen sind an einem Ständer mit einem Drehgestell und einem Auslegerarm angeordnet, an dem sich der Getriebekopf befindet. Die Grundlage für die Anordnung dieser Schwenkachsen ergibt sich aus der DE-OS 24 35 156. Zum Antrieb des Getriebekopfes, der die drei letzten Schwenkachsen enthält, hat sich die konzentrische Anordnung von drei Antriebswellen in einem den Getriebekopf tragenden Arm als zweckmässig erwiesen, wie dies aus der DE-AS 24 02 829 bekannt ist. Mit diesem vorbekannten Getriebe wird die Beweglichkeit einer Hand nachgeahmt, wonach an einem vorderen Gehäuse, welches dem Arm entspricht, über eine Querwelle ein mittleres Gehäuse gelagert ist, welches der Hand mit dem Handwurzelgelenk entspricht, wobei an dem mittleren Gehäuse ein hinteres Gehäuse schwenkbar gelagert ist, welches einem Finger der Hand entspricht. Der Antrieb des hinteren Gehäuses erfolgt über Kegelradsätze mit Hilfe der querliegenden Zwischenwellen.

Bei diesem Stand der Technik, dem im Prinzip auch die DE-AS 26 19 336 angehört, wird als nachteilig empfunden, dass das hintere Gehäuse in der Streckstellung des Gelenkkopfes keine spitzwinkeligen, insbesondere keine rechtwinkeligen Schwenkbewegungen ohne nennenswerte Unterbrechung durchführen kann. Es muss vielmehr zunächst das vordere Kopfteil eine Schwenkbewegung ausführen, bevor das hintere Kopfteil in die gewünschte Lage gebracht werden kann. Somit sind solche Anlagen nicht in der Lage, das Werkzeug entlang von räumlich gekrümmten Linien unterbrechungsfrei und kontinuierlich zu führen.

Deshalb lehren die DE-OS 29 27 485 ebenso wie die DE-AS 27 45 932, das mittlere Kopfteil entlang einer schrägen Ebene am vorderen Kopfteil rotierfähig zu führen. Demzufolge ist die Zwischenwelle im Getriebekopf sowohl schräg zur Achse der konzentrischen Antriebswellen als auch schräg zur Schwenkachse des hinteren Kopfteiles anzuordnen. Allerdings wird in beiden Fällen vorgeschrieben, sämtliche Achsen in einem Punkt schneiden zu lassen. Damit soll erreicht werden, dass die Schwenkachse des hinteren Kopfteiles und damit das daran angeflanschte Werkzeug immer senkrecht zu einem von dem Getriebekopf erreichbaren Punkt eines sphärischen Abschnittes stehen kann. Ausserdem gelingt es mit dieser vorbekannten Anordnung, das Werkzeug entlang von räumlich gekrümmten Linien unterbrechungsfrei und kontinuierlich zu führen, also eine Bahnsteuerung zuzulassen.

Bei sämtlichen genannten Druckschriften befindet sich jedoch die Schwenkachse des hinteren Kopfteiles (6. Achse) bei gestreckter Lage des Getriebekopfes koaxial zur Achse der konzentrischen Antriebswellen. Diese Grundstellung bringt Schwierigkeiten bei der rechnerisch gesteuerten Bewegung des Manipulators. Eine vom Programm vorgegebene Verdrehung des Werkzeuges um seine eigene Schwenkachse (6. Achse) lässt in der Durchführung der rechnerischen Vorgabe nämlich offen, ob der Getriebekopf um die Achse der konzentrischen Antriebswellen (4. Achse) oder ob das hintere Kopfteil für sich allein um diese Achse gedreht werden soll. Diese Zweideutigkeit konnte bisher nur durch programm- bzw. steuerungstechnische Manpulationen, allerdings nur unbefriedigend überwunden werden.

Der Erfindung liegt daher die Aufgabe zugrunde, einen Getriebekopf für Manipulatoren so auszubilden, dass die erwähnten Zweideutigkeiten gar nicht entstehen können. Diese Aufgabe ist neu.

Ausgehend von der Lehre der DE-AS 27 45 932 wird die gestellte Aufgabe erfindungsgemäss mit den kennzeichnenden Merkmalen des Hauptanspruches gelöst. Die Erfindung weicht von der bisher konsequent vertretenen Lehre ab, die Schwenkachsen des Getriebekopfes (Achsen 4 bis 6) in einem gemeinsamen Punkt sich schneiden zu lassen. In der Streckstellung des erfindungsgemässen Getriebekopfes befindet sich daher die Schwenkachse des hinteren Kopfteiles (6. Achse) in einer Winkelstellung gegenüber der Achse der konzentrischen Antriebswelle. Es ist demnach unmöglich, dass beide Achsen bei irgendeiner Bewegung in eine zueinander konzentrische Lage kommen können. Es können demnach keine Zweideutigkeiten beim rechnerisch gesteuerten Bewegen der einzelnen Getriebeachsen auftreten. Dies schliesst allerdings nicht aus, dass das Werkstück um eine zur Achse der Antriebswellen koaxialen Achse gedreht werden kann, weil nämlich im Sinne des Unteranspruches 4 die Anflanschfläche des hinteren Kopfteiles im besonderen senkrecht zu der Achse der Antriebswellen angeordnet sein kann. Die genannte Bewegung kann daher in der Streckstellung des Getriebekopfes durch Drehbewegung des vorderen Kopfteiles um die Achse der konzentrischen Antriebswellen herbeigeführt werden. Die Erfindung bietet aber darüber hinaus auch die Möglichkeit, die Anflanschfläche in anderen Ebenen anzuordnen.

Der Gegenstand der Erfindung bietet die Voraussetzung zur besonders geringvolumigen Bauweise des Getriebekopfes, weil im Sinne der Unteransprüche 2 und 3 die Untersetzungsgetriebe abtriebsseitig angeordnet werden können. Es wird als ein Vorteil angesehen, wenn eine der inneren, koaxialen Antriebswellen nicht direkt, sondern über eine schräge Hohlwelle und über das Untersetzungsgetriebe auf das mittlere Kopfteil getrieblich einwirkt.

Die Erfindung bietet ausserdem eine weitere, überraschende Variante im Sinne der Unteransprüche 6 bis 9, indem es ohne wesentlichen Aufwand möglich ist, einen 6 Achsen umfassenden Manipulator auf eine fünfachsige Steuerung umzustellen und deshalb nur fünf Antriebsmotore einsetzen zu müssen. Solche Manipulatoren können ohne weiteres für bestimmte Aufgaben, z. B. Schutzgasschweissen, eingesetzt werden.

Weitere Einzelheiten der Erfindung ergeben sich aus den Unteransprüchen und der Zeichnung. In der Zeichnung ist die Erfindung beispielsweise und schematisch dargestellt. Es zeigen:

Fig. 1: eine symbolische Seitenansicht eines Getriebekopfes in seiner gestreckten Lage,

Fig. 2: eine Seitenansicht des Getriebekopfes gem. Fig. 1 mit einer Winkelstellung des hinteren Kopfteiles,

Fig. 3: eine Seitenansicht des Getriebekopfes gem. Fig. 2 mit einer um 180° verdrehten Lage des Getriebekopfes,

Fig. 4: eine Seitenansicht des Getriebekopfes gem. Fig. 1 mit einer verschwenkten Stellung des mittleren Kopfteiles,

Fig. 5: eine Seitenansicht des Getriebekopfes gem. Fig. 1 mit verschwenkter Lage des mittleren und des hinteren Kopfteiles,

Fig. 6: einen schematischen Längsschnitt durch den Getriebekopf mit seinen Antriebszügen entsprechend einer Anordnung gem. Fig. 1 und

Fig. 7: einen Längsschnitt durch den Getriebekopf mit einer Antriebsvariante.

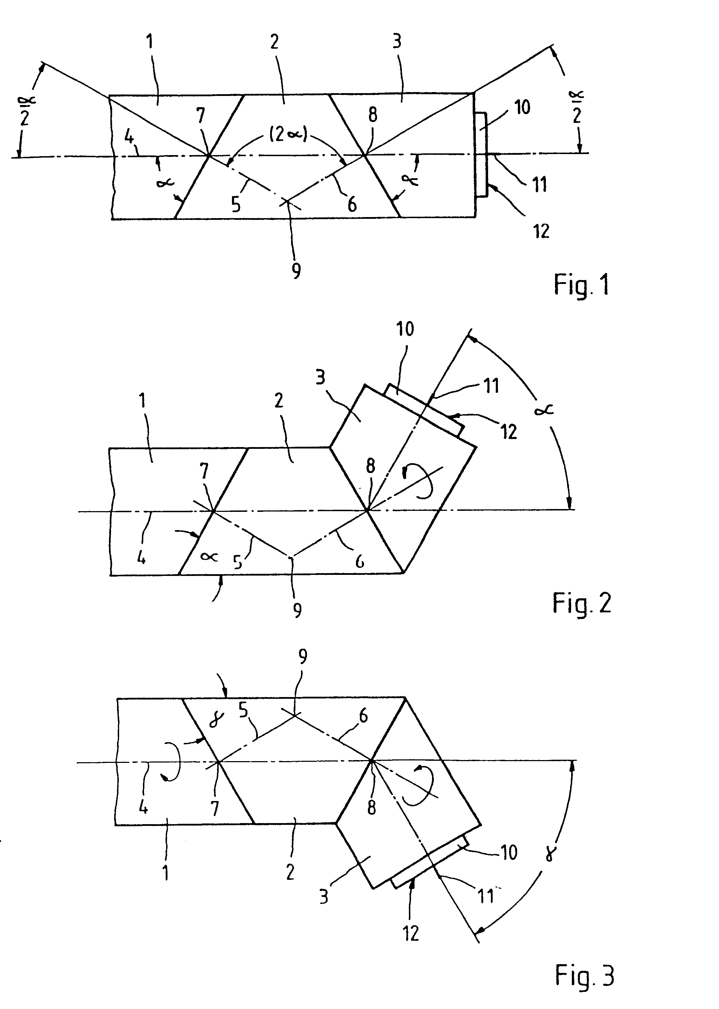

Im Ausführungsbeispiel der Figur 1 ist der Getriebekopf in seiner geometrischen Gliederung ganz schematisch als rohrförmiger Körper dargestellt. Danach besitzt der Getriebekopf ein vorderes Kopfteil 1, ein mittleres Kopfteil 2 und ein hinteres Kopfteil 3. Das vordere Kopfteil 1 ist um die Achse 4, die im allgemeinen der Längsachse des Auslegers eines Manipulators entspricht, verdrehbar. An diesem vorderen Kopfteil 1 ist das mittlere Kopfteil 2 um die Schwenkachse 5 drehbar gelagert. Beide Achsen 4, 5 schneiden sich im Schnittpunkt 7. Am mittleren Kopfteil 2 ist wiederum das hintere Kopfteil 3 um die Schwenkachse 6 drehbar gelagert. Diese Schwenkachse 6 schneidet die Achse 4 im Schnittpunkt 8. Der Schnittpunkt 9 der Schwenkachsen 5, 6 befindet sich jedoch radial distanziert von der Achse 4. Die Schwenkachsen 5, 6 stehen zueinander in einem stumpfen Winkel, was zur Folge hat, dass die Trennebenen der Kopfteile 1, 2 bzw. 2, 3 zueinander im spitzen Winkel stehen. Vorzugsweise sind die Winkel so gewählt, dass sich Symmetrie ergibt. Im Beispiel steht die schräge Ebene zwischen den einzelnen Kopfteilen in einem Winkel $\alpha$ zur Längsachse 4 des Getriebekopfes 1, 2, 3.

Weiterhin ist im Interesse einer Symmetrie angenommen, dass die Achsen 5 und 6 in einem Winkel ½ $\alpha$ zur Längsachse 4 stehen, was wiederum zur Folge hat, dass die schrägen Schwenkachsen 5 und 6 in einem stumpfen Winkel von 2 $\alpha$ zueinander stehen.

Am hinteren Kopfteil 3 befindet sich eine Flanschplatte 10 mit einer Anflanschfläche 12 zur Befestigung des nicht dargestellten Werkzeuges, beispielsweise eines Schweisswerkzeuges. Mit 11 ist symbolisch ein Markierungsstift bezeichnet, der die Lage des Werkzeuges in Abhängigkeit von den später beschriebenen Schwenkmöglichkeiten erkennen lässt.

Im Beispiel der Figur 2 ist die erste, einfache Schwenkmöglichkeit dargestellt, wonach das hintere Kopfteil 3 um die Schwenkachse 6 um 180° gedreht wird. Unter der Annahme, dass die Schwenkebenen zwischen den einzelnen Kopfteilen 1, 2, 3 symmetrisch zueinander sind und den Winkel $\alpha$ zueinander bilden, ergibt sich, dass die Verdrehung des hinteren Kopfteiles 3 um seine Schwenkachse 6, und zwar um 180°, zum Ausschlag dieses Kopfteiles 3 um den Winkel $\alpha$ führt.

Wenn man nun den Getriebekopf in der in Figur 2 gezeigten Stellung um die Achse 4 um 180° verdreht, wie dies in Figur 3 dargestellt ist, ergibt sich die spiegelbildliche Stellung des hinteren Kopfteiles 3 gegenüber der Stellung in Figur 2. Aus der Lage der Achsen 5, 6 sieht man, dass in keiner Stellung die Schwenkachse 6 koaxial zur Achse 4 zu liegen kommt, weil in jedem Falle der Schnittpunkt 9 der Achsen 5, 6 auf einer Kreisbahn um die Achse 4 sich bewegt. Infolgedessen ist eine Zweideutigkeit der Achsenlage ausgeschlossen. Man braucht demnach keine programm- oder steuerungstechnischen Manipulationen wie beim Stand der Technik durchzuführen.

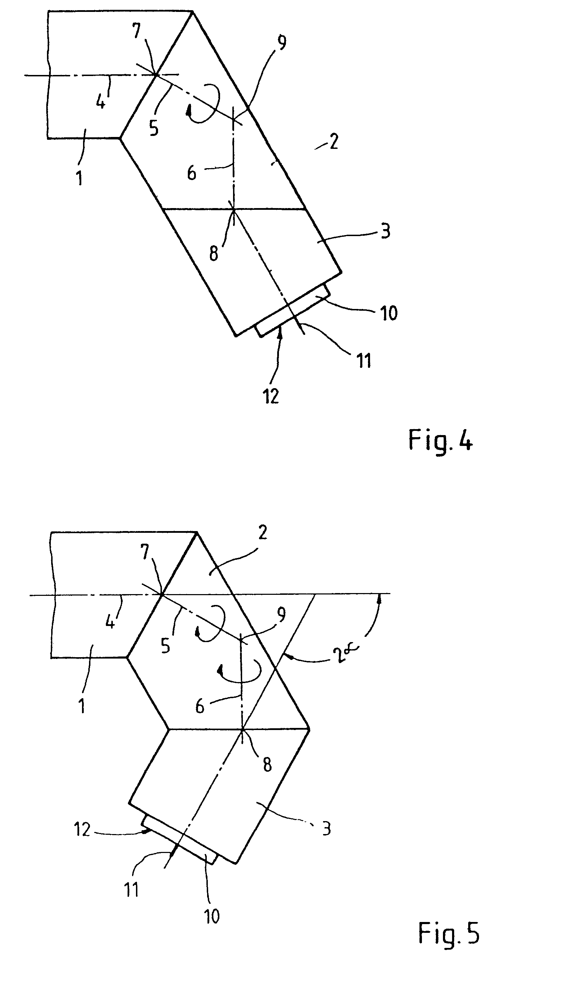

Die Anordnung der Figur 1 bietet aber darüber hinaus weitere Bewegungsmöglichkeiten des Gelenkkopfes, die sich über diejenigen des Standes der Technik hinaus erstrecken. Figur 4 zeigt, dass beim Verschwenken des mittleren Kopfteiles 2 um die Schwenkachse 5 sich eine Winkellage ergibt, die derjenigen der Figur 3 entspricht, ohne dass dabei aber das vordere Kopfteil 1 verdreht worden ist. In dieser in Figur 4 gezeigten Stellung lässt sich das hintere Kopfteil 3 um die Schwenkachse 6 drehen, so dass sich ein Schwenkwinkel des hinteren Kopfteiles 3 gegenüber dem vorderen Kopfteil 1 um den Betrag 2 $\alpha$ ergibt. Verdreht man in dieser Stellung das vordere Kopfteil 1 um die Achse 4, dann ergibt sich ein maximaler Bewegungsspielraum für den symbolisch dargestellten Markierungsstift 11.

Dieser Bewegungsspielraum ist grösser als derjenige des nächstliegenden Standes der Technik. Ausserdem ergibt sich durch die beschriebene Anordnung der Vorteil, dass die Unfallgefahr beim Verschwenken der Teile 1, 2, 3 relativ zueinander durch Vermeidung von Eng- und Klemmstellen wesentlich reduziert werden konnte. Andererseits ist der beschriebene Gegenstand in der Lage, das Werkstück in der gestreckten Lage des Getriebekopfes um die Achse 4 der Antriebswellen zu verschwenken, wie dies Figur 1 zeigt. Zu diesem Zweck braucht lediglich die Flanschplatte 10 senkrecht zur Achse 4 am hinteren Kopfteil 3 angeordnet zu werden. Wünscht man diese Koaxialität des Stiftes 11 zur Achse 4 der Antriebswellen nicht, bleibt es unbenommen, die Lage der Flanschplatte 10 in einem anderen Winkel zu wählen.

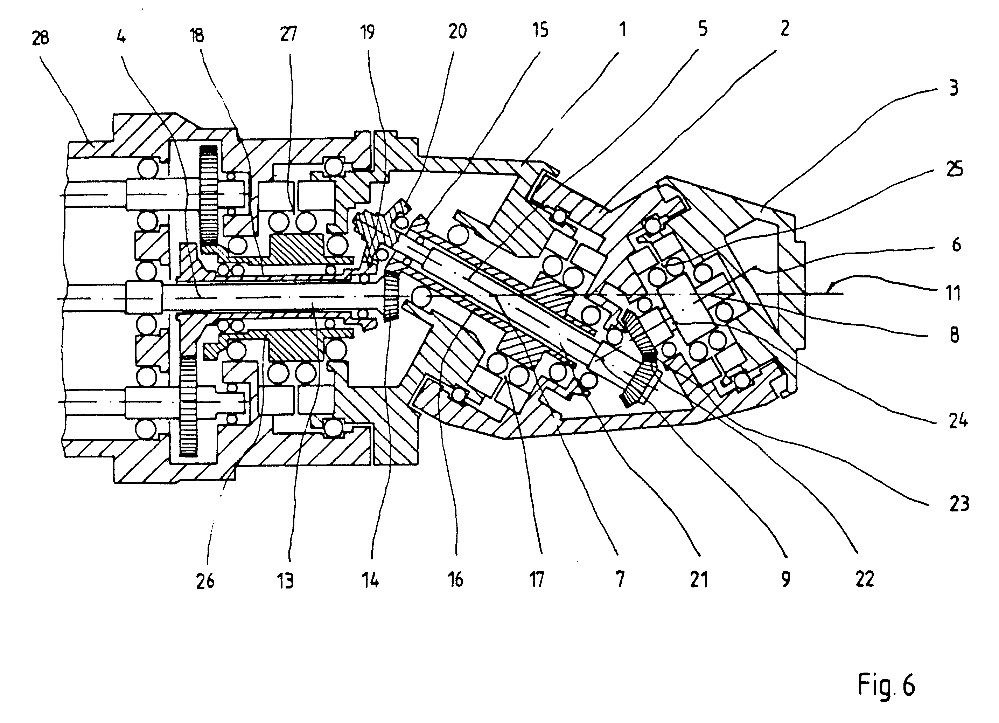

Das Ausführungsbeispiel der Figur 6 zeigt den konstruktiven Aufbau des Getriebekopfes im Sinne der Strecklage gemäss Figur 1. Danach ist eine innere Antriebswelle 13 über die Kegelräder 14, 15 mit einer Hohlwelle 16 verbunden, welche über ein Untersetzungsgetriebe 17 mit dem mittleren Kopfteil 2 drehschlüssig verbunden ist. Dieses mittlere Kopfteil 2 wird über diese Kegelradanordnung 14, 15 um die Schwenkachse 5 gedreht. Es ist über geeignete Lagerungen am vorderen Kopfteil 1 um eine zur Schwenkachse 5 senkrechte Ebene geführt.

Die mittlere Antriebswelle 18 wirkt über die Kegelräder 19, 20 auf die Zwischenwelle 21 ein, die mit der Schwenkachse 5 übereinstimmt. Am Ende der Zwischenwelle 21 sind Kegelräder 22, 23 zum Antrieb der Abtriebswelle 24 vorgesehen, welche sich im hinteren Kopfteil 3 befindet, das seinerseits gegenüber dem mittleren Kopfteil 2 drehbar gelagert ist, und zwar um die Schwenkachse 6. Auch hier ist zwischen der Abtriebswelle 24 und dem hinteren Kopfteil 3 ein Untersetzungsgetriebe 25 vorgesehen.

Die äussere Antriebswelle 26 wirkt über das Untersetzungsgetriebe 27 direkt auf den vorderen Kopfteil 1 ein, der koaxial zum Auslegerarm 28 angeordnet und an diesem drehbar gelagert ist.

Sämtliche Untersetzungsgetriebe 17, 25, 27 sind folglich abtriebsseitig angeordnet, was eine weitgehend spielfreie, räumlich kompakte und damit klein bauende Getriebekopf-Konstruktion zur Folge hat.

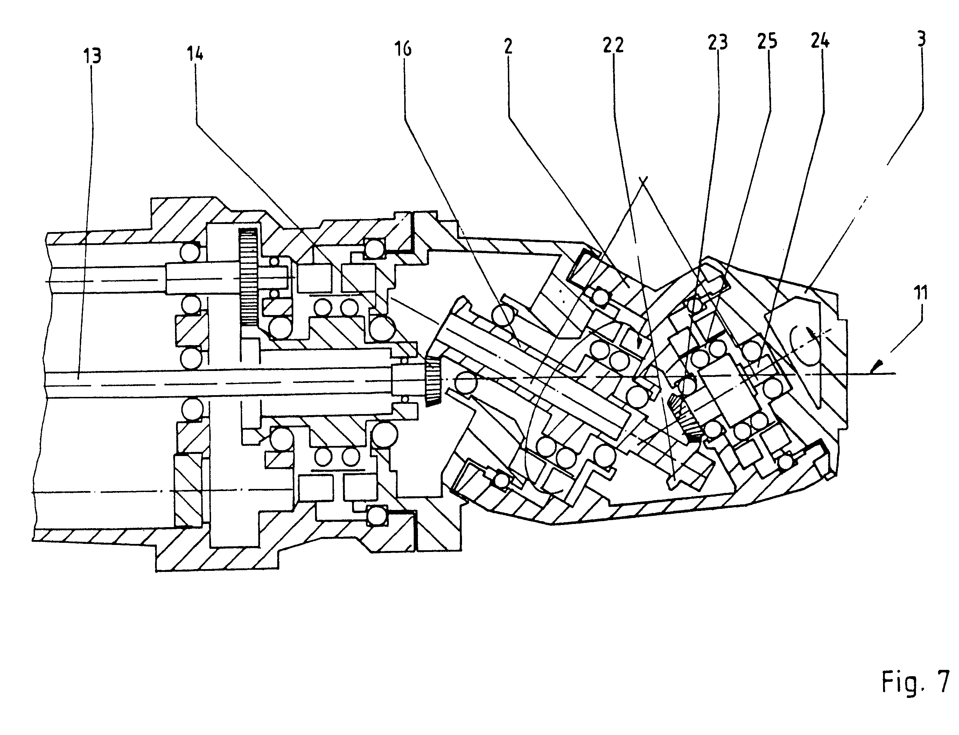

Ausgehend von dieser Anordnung lassen sich überraschende Varianten ableiten. So ist in Figur 7 beispielsweise dargestellt, dass man auf einen Antriebsmotor verzichten kann, wenn man das mittlere und hintere Kopfteil 2, 3 mit der gleichen Antriebswelle 13 antreibt. Das Kegelrad 14 treibt dabei die Hohlwelle 16 an, die über Kegelräder 22, 23 auf die Abtriebswelle 24 einwirken. Das Übersetzungsverhältnis der Kegelräder 22, 23 sollte 1 : 1 und das Untersetzungsverhältnis der Getriebe 17, 25 sollte gleich gross gewählt werden.

Daraus folgt bei entsprechender Drehrichtungsvorgabe durch den Antriebszug 14, 16, 22, 23, 24, 25, dass sich das hintere Kopfteil 3 gegensinnig zum mittleren Kopfteil 2 dreht. Man kann damit eine Überdeckung beherrschen, wie sie aus Figur 5 hervorgeht, obwohl ein Antriebsmotor weniger zur Verfügung steht. Solche Anordnungen sind beispielsweise für Schutzgas-Schweissarbeiten ausreichend und zweckmässig.

Will man das hintere Kopfteil 3 im gleichen Drehsinn zum mittleren Kopfteil 2 bewegen, dann muss im Antriebszug 14, 16, 22, 23, 24, 25 eine entsprechende Drehrichtung, z.B. mittels eines Zwischenrades, vorgegeben werden. Ein solcher Fall ergibt die gleiche Raumüberdeckung, jedoch weniger Übersichtlichkeit des Bewegungsablaufes für den Programmierer. Die im Zwischenbereich gegenüber der ersten Möglichkeit veränderte Orientierung des hinteren Kopfteiles 3 kann jedoch auch, abhängig von den räumlichen Verhältnissen, bei geübten Programmierern Vorteile bieten.

Will man beide Möglichkeiten ausnutzen, wäre die Anordnung eines Wechselgetriebes zwischen den Kopfteilen 2, 3 notwendig, das mit Hilfe einer Kupplung (wie bei Werkzeugmaschinen üblich) Gleichsinn oder Gegensinn der Drehbewegung dieser Kopfteile 2, 3 einzuschalten gestattet.

Letzlich lassen sich die Kopfteile 2, 3 aber auch durch eine Kupplung mit Haltebremse verbinden, indem durch eine geeignete Schaltung das mittlere und hintere Kopfteil 2, 3 drehschlüssig zueinander gehalten werden, wodurch Bewegungen auch nach dem Stand der Technik möglich sind.

**Stückliste**

1   vorderes Kopfteil
2   mittleres Kopfteil
3   hinteres Kopfteil
4   Achse der Antriebswellen (4. Achse)
5   Schwenkachse des mittleren Kopfteiles
6   Schwenkachse des hinteren Kopfteiles
7   Schnittpunkt
8   Schnittpunkt
9   Schnittpunkt
10   Flanschplatte
11   Markierungsstift
12   Anflanschfläche
13   innere Antriebswelle
14   Kegelrad
15   Kegelrad
16   Hohlwelle
17   Untersetzungsgetriebe
18   mittlere Antriebswelle
19   Kegelrad
20   Kegelrad
21   Zwischenwelle
22   Kegelrad
23   Kegelrad
24   Abtriebswelle (6. Achse)
25   Untersetzungsgetriebe
26   äussere Antriebswelle
27   Untersetzungsgetriebe
28   Auslegearm

**Patentansprüche**

1. Getriebekopf für Manipulatoren, bestehend aus drei hintereinander angeordneten und um zueinander schräge Achsen (4, 5, 6) gelagerten Kopfteilen (1, 2, 3) mit drei konzentrisch zueinander angeordneten Antriebswellen, von denen eine (18) der inneren Antriebswellen über Kegelradpaare (19, 20) und eine schräge Zwischenwelle (21), welche die Schwenkachse (7) für das mittlere Kopfteil (2) bildet, mit dem das Werkzeug tragenden hinteren Kopfteil (3) verbunden und die andere der inneren Antriebswellen (13) mit einem Kegelradpaar (14, 15), dessen Abtriebsrad (15) die Zwischenwelle (21) konzentrisch mit Spiel umgreift, mit dem mittleren Kopfteil (2) drehschlüssig gekoppelt ist, dadurch gekennzeichnet, dass die Schwenkachse (6) des hinteren Kopfteiles (3) in der Streckstellung des Getriebekopfes (1, 2, 3) im spitzen Winkel ($\frac{1}{2}\alpha$) zur Achse (4) der konzentrischen Antriebswellen (13, 18, 26) liegt und mit der Achse (5) der Zwischenwelle (21) einen von der Achse (4) der Antriebswellen (13, 18, 26) distanzierten Schnittpunkt (9) bildet.

2. Getriebekopf nach Anspruch 1, dadurch gekennzeichnet, dass die innere (13) der konzentrischen Antriebswellen mit dem mittleren Kopfteil (2) drehschlüssig gekoppelt ist.

3. Getriebekopf nach Anspruch 2, dadurch gekennzeichnet, dass das mittlere Kopfteil (2) mit seiner Antriebswelle (13) durch eine die Zwischenwelle (21) mit Spiel umgreifende Hohlwelle (16) über ein sich am mittleren Kopfteil (2) abstützendes Untersetzungsgetriebe (17) verbunden ist.

4. Getriebekopf nach Anspruch 1 oder einem der folgenden, dadurch gekennzeichnet, dass die Anflanschfläche (12) des hinteren Kopfteiles (3) für das Werkzeug im spitzen Winkel (½ α) zu deren Schwenkachse (6), insbesondere senkrecht zu der Achse (4) der Antriebswellen (13, 18, 26) angeordnet ist.

5. Getriebekopf nach Anspruch 1 oder einem der folgenden, dadurch gekennzeichnet, dass die Schwenkachsen (5, 6) des mittleren (2) und des hinteren (3) Kopfteiles einen stumpfen (2 α) Winkel zueinander bilden.

6. Getriebekopf nach Anspruch 1 oder einem der folgenden, dadurch gekennzeichnet, dass das mittlere und das hintere Kopfteil (2, 3) von einer gemeinsamen Antriebswelle (13) angetrieben sind.

7. Getriebekopf nach Anspruch 6, dadurch gekennzeichnet, dass das hintere Kopfteil (3) gegensinnig zum mittleren Kopfteil (2) angetrieben ist.

8. Getriebekopf nach Anspruch 6 oder 7, gekennzeichnet durch die Anordnung eines schaltbaren Wechselgetriebes zwischen den Antriebszügen des mittleren und hinteren Kopfteiles (2, 3).

9. Getriebekopf nach Anspruch 6 oder folgenden, gekennzeichnet durch die Anordnung einer Schaltkupplung mit Haltebremse zwischen dem mittleren und hinteren Kopfteil (2, 3).

## Claims

1. Gearhead for manipulators, consisting of three head sections (1, 2, 3) which are arranged behind one another and mounted about axes (4, 5, 6) inclined relative to each other and which have three drive shafts (13, 18, 26) arranged concentrically with each other, one of the inner drive shafts (18) being connected to the rear head section (3) carrying the tool, via pairs of bevel gears (19, 20) and an inclined intermediate shaft (21), which forms the swivelling axis (7) for the middle head section (2), and the other of the inner drive shafts (13) being locked in rotation with the middle head section (2) via a pair of bevel gears (14, 15), the drive gear (15) of which embraces concentrically with play the intermediate shaft (21), characterized in that the swivelling axis (6) of the rear head section (3), in the extended position of the gearhead (1, 2, 3), lies at an acute angle (½ α) relative to the axis (4) of the concentric drive shafts (13, 18, 26) and, together with the axis (5) of the intermediate shaft (21), forms an intersection point (9) located at a distance from the axis (4) of the drive shafts (13, 18, 26).

2. Gearhead according to Claim 1, characterized in that the inner shaft (13) of the concentric drive shafts is locked in rotation with the middle head section (2).

3. Gearhead according to Claim 2, characterized in that the middle head section (2) is connected to its drive shaft (13) by a sleeve shaft (16) embracing the intermediate shaft (21) with play, via a reduction gear (17) supported by the middle head section (2).

4. Gearhead according to Claim 1 or one of the following claims, characterized in that the flanging area (12) of the rear head section (3) for the tool is arranged at an acute angle (½ α) relative to the swivelling axis (6) thereof, in particular perpendicular to the axis (4) of the drive shafts (13, 18, 26).

5. Gearhead according to Claim 1 or one of the following claims, characterized in that the swivelling axes (5, 6) of the middle head section (2) and rear head section (3) form an obtuse angle (2 α) relative to each other.

6. Gearhead according to Claim 1 or one of the following claims, characterized in that the middle and rear head sections (2, 3) are driven by a common drive shaft (13).

7. Gearhead according to Claim 6, characterized in that the rear head section (3) is driven in the opposite direction to the middle head section (2).

8. Gearhead according to Claim 6 or Claim 7, characterized in that a switchable gear change box is arranged between the drive trains of the middle and rear head sections (2, 3).

9. Gearhead according to Claim 6 or the subsequent claims, characterized in that a switching coupling with a retaining brake is arranged between the middle and rear head sections (2, 3).

## Revendications

1. Tête de mécanisme pour manipulateurs, constitué par trois éléments de tête (1, 2, 3) disposés les uns à la suite des autres et tourillonnés autour d'axes (4, 5, 6) obliques les uns par rapport aux autres, et comportant trois arbres d'entraînement concentriques (13, 18, 26), l'un (18) des arbres intérieurs d'entraînement étant relié par l'intermédiaire d'un couple de pignons coniques (19, 20), et un arbre intermédiaire oblique (21), qui forme l'axe de pivotement (7) pour l'élément de tête intermédiaire (2), étant relié à l'élément de tête arrière (3) portant l'outil, et l'autre (13) des arbres intérieurs d'entraînement étant accouplé selon une liaison d'entraînement en rotation à l'élément de tête intermédiaire (2), par l'intermédiaire d'un couple de pignons coniques (14, 15), parmi lesquels le pignon d'entraînement (15) entoure concentriquement et avec jeu l'arbre intermédiaire (21), caractérisée par le fait que lorsque la tête de transmission (1, 2, 3) est en position déployée l'axe de pivotement (6) de l'élément de tête arrière (3) fait un angle aigu (½ α) par rapport à l'axe (4) des arbres concentriques d'entraînement (13, 18, 26) et intersecte l'axe (5) de l'arbre intermédiaire (21) en un point d'intersection (9) distant de l'axe (4) des arbres d'entraînement (13, 18, 26).

2. Tête de transmission suivant la revendication 1, caractérisée par le fait que l'arbre intérieur (13) faisant partie des arbres concentriques d'entraînement est accouplé selon une liaison d'entraînement en rotation à l'élément de tête intermédiaire (2).

3. Tête de transmission suivant la revendication 2, caractérisée par le fait que l'élément de tête intermédiaire (2) est relié à son arbre d'entraînement (13) par un arbre creux (16) entourant avec jeu l'arbre intermédiaire (21), au moyen d'un démultiplicateur (17) prenant appui sur l'élément de tête intermédiaire (2).

4. Tête de transmission suivant la revendication 1 ou l'une des suivantes, caractérisée par le fait que la surface (12) de raccordement par bride de l'élément de tête arrière (3) pour l'outil est disposée de manière à faire un angle aigu (½ α) par rapport à son axe de pivotement (6), et notamment est perpendiculaire à l'axe (4) des arbres d'entraînement (13, 18, 26).

5. Tête de transmission suivant la revendication 1 ou l'une des suivantes, caractérisée par le fait que les axes de pivotement (5, 6) de l'élément de tête intermédiaire (2) et de l'élément de tête arrière (3) font entre eux un angle obtus (2 α).

6. Tête de transmission suivant la revendication 1 ou l'une des suivantes, caractérisée par le fait que les éléments de tête intermédiaire et arrière (2, 3) sont entraînés par un arbre d'entraînement commun (13).

7. Tête de transmission suivant la revendication 6, caractérisé par le fait que l'élément de tête arrière (3) est entraîné en sens opposé de l'élément de tête intermédiaire (2).

8. Tête de transmission suivant la revendication 6 ou 7, caractérisée par le montage d'un mécanisme commutable de changement de vitesse entre les chaînes d'entraînement des éléments de tête intermédiaire et arrière (2, 3).

9. Tête de transmission suivant la revendication 6 ou les suivantes, caractérisée par le montage d'un embrayage muni d'un frein de retenue entre les éléments de tête intermédiaires et arrière (2, 3).

Fig. 1

Fig. 2

Fig. 3

Fig. 4

Fig. 5

Fig. 6

Fig. 7

13

0133499